# FASCICULE DE BREVET EUROPEEN

(11) **EP 3 002 379 B1**
(45) Date de publication et mention de la délivrance du brevet: **01.04.2020**
(21) Numéro de dépôt: 15183502.2
(22) Date de dépôt: 02.09.2015
(51) Int. Cl.: E04C 2/38, B61D 17/04

(54) **PANNEAU EN MATÉRIAU COMPOSITE POUR UN VÉHICULE FERROVIAIRE ET PROCÉDÉ POUR FABRIQUER CE PANNEAU**
PANEEL AUS VERBUNDMATERIAL FÜR EIN SCHIENENFAHRZEUG, UND VERFAHREN ZUR HERSTELLUNG EINES SOLCHEN PANEELS
PANEL MADE OF COMPOSITE MATERIAL FOR A RAILWAY VEHICLE AND METHOD FOR MANUFACTURING THAT PANEL

(30) Priorité: 04.09.2014 FR 1458301
(43) Date de publication de la demande: 06.04.2016
(73) Titulaire: ALSTOM Transport Technologies, 93400 Saint-Ouen (FR)
(72) Inventeur: HALLONET, Frédéric, 17220 LA JARNE (FR)
(74) Mandataire: Lavoix

(56) Documents cités:
- WO-A1-2013/167171
- CA-A1- 2 678 696
- FR-A- 1 013 575
- FR-A1- 2 287 559
- FR-A1- 2 982 626
- US-A1- 2012 186 184
- US-A1- 2013 037 984
- US-A1- 2014 202 097

## Description

L'invention concerne un panneau en matériau composite pour un véhicule ferroviaire, notamment un plancher ou un pavillon d'un véhicule ferroviaire. En outre, l'invention concerne un procédé pour fabriquer un panneau en matériau composite d'un véhicule ferroviaire, notamment un plancher ou un pavillon d'un véhicule ferroviaire.

US 2011/0030576 A1 divulgue un panneau d'un matériau composite qui est fermé sur ses deux côtés par des plaques. Dans le matériau composite, une gaine est agencée pour des câbles électriques. Ce panneau nécessite beaucoup de matériaux pour une rigidité limitée.

FR 1 013 575 A1 concerne un procédé pour la fabrication d'un élément de construction, par exemple de murs ou cloisons intérieurs, des habitations préfabriquées.

Le but de la présente invention est de proposer un panneau léger en matériau composite qui est moins cher à fabriquer, notamment par l'usage de très peu d'outillage.

Pour cela l'invention a pour objet un panneau pour un véhicule ferroviaire selon la revendication 1.

Suivant des modes particuliers de réalisation, le panneau comprend l'une ou plusieurs des caractéristiques suivantes, prise(s) isolément ou suivant toutes les combinaisons techniquement possibles :
- le panneau comporte au moins une gaine traversant, au moins partiellement, le réseau de poutres, de façon à ce qu'au moins une couche de lattes soit agencée, sur un ou sur chaque côté de la ou de chaque gaine suivant la direction d'empilement ;
- chaque poutre comporte au moins quatre couches de lattes ;
- le panneau comporte au moins une plaque de fermeture fixée, en particulier collée, suivant la direction d'empilement sur une ou sur chaque côté du réseau de poutre et s'étendant sur tout la surface du panneau ;
- le panneau comporte une pluralité de cavités entre les poutres, un matériau d'isolation phonique et/ou un accumulateur d'énergie étant agencé(s) dans la ou les cavités ;
- les lattes comprennent des fibres de renforcement en carbone et/ou en verre dans une résine ;
- dans chaque couche, à chaque intersection, la latte continue est agencée sensiblement orthogonalement aux lattes interrompues ; et/ou
- aux intersections, les lattes interrompues butent contre les lattes continues.

L'invention a également pour objet un procédé pour fabriquer un panneau d'un véhicule ferroviaire selon la revendication 9.

Suivant des modes particuliers de réalisation, le procédé comporte l'une ou plusieurs des caractéristiques suivantes, prise(s) isolément ou suivant toutes les combinaisons techniquement possibles :
- le procédé comprend en outre les étapes suivantes :
   appliquer au moins une bâche flexible préformée, notamment en silicone, sur l'ensemble du panneau,
   mettre la bâche flexible sous vide, et
   chauffer le panneau à une température suffisante pour mettre en solution les couches adhésives et pour les polymériser ; et/ou
- le procédé pour fabriquer un panneau tel que décrit dessus.

L'invention et ses avantages seront mieux compris à la lecture de la description qui va suivre donnée uniquement à titre d'exemple et faite en se référant aux dessins annexés sur lesquels :
- la figure 1 est une vue en perspective d'un panneau en matériau composite selon l'invention ;
- la figure 2 est une vue en perspective agrandie d'une intersection de deux poutres du panneau selon l'invention ;
- la figure 3 est une vue en perspective et en coupe d'un panneau en matériau composite muni d'une isolation phonique ;
- la figure 4 est une vue en coupe et en perspective d'un panneau muni d'une platine de sécurisation pour une fixation d'un cadre métallique au panneau suivant une direction d'empilement ;
- la figure 5 est une vue en coupe et en perspective d'un panneau muni d'une fixation latérale du cadre métallique selon une direction orthogonale à la direction d'empilement ; et
- la figure 6 est un organigramme des étapes d'un procédé de fabrication d'un panneau selon l'invention.

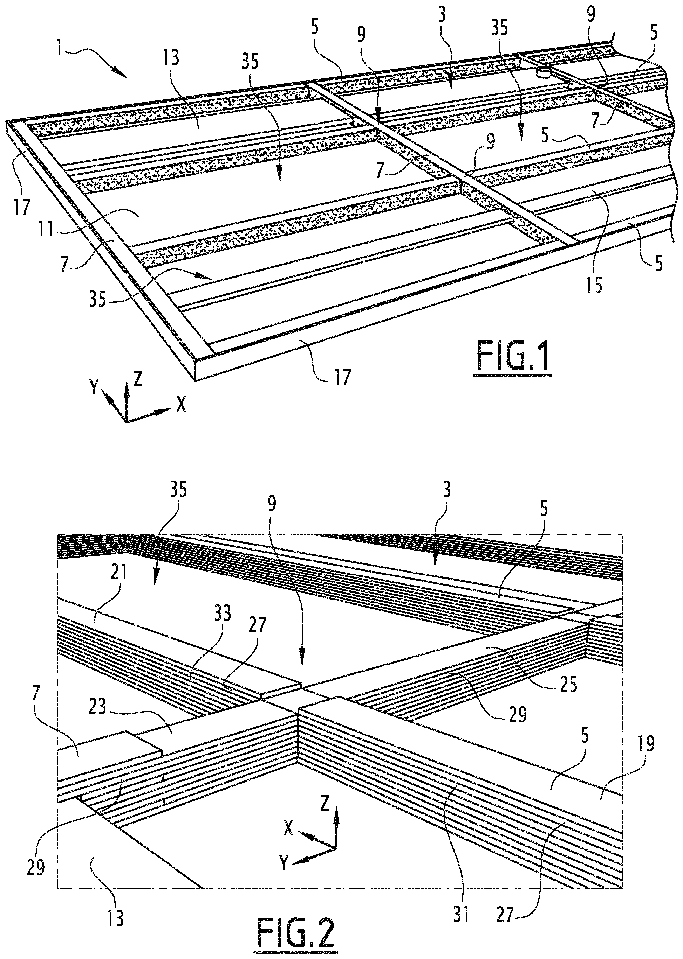

La figure 1 montre en perspective un panneau en matériau composite pour un véhicule ferroviaire. Le panneau 1 forme, par exemple, un plancher ou un pavillon d'un véhicule ferroviaire, par exemple un tramway. Le panneau 1 s'étend dans un plan défini par une direction longitudinale X et une direction transversale Y. Le panneau 1 est sensiblement rectangulaire.

Le panneau 1 est pourvu d'un réseau de poutres 3 comprenant des poutres longitudinales 5 suivant la direction longitudinale X et des poutres transversales 7 suivant la direction transversale Y. Les réseaux de poutres 3 présentent plusieurs intersections 9 entre les poutres longitudinales 5 et les poutres transversales 7. Dans un autre mode de réalisation, les poutres suivent des directions non perpendiculaires deux à deux et présentent donc des intersections non-orthogonales ou obliques.

Le réseau de poutres 3 est fixé, notamment collé, à une plaque de fermeture 11 inférieure. La plaque de fermeture 11 s'étend dans le plan du panneau 1. Une plaque de fermeture supérieure pour fermer le panneau sur le côté opposé à la plaque de fermeture 11 inférieure est prévu en variante. Elle n'est pas montrée sur la figure 1. Par exemple, la plaque de fermeture inférieure et/ou supérieure est une tôle métallique.

En outre, une gaine aéraulique 13 traverse le panneau suivant la direction longitudinale X et parallèlement aux poutres longitudinales 5. La gaine aéraulique traverse transversalement de part en part les poutres transversales 7 à l'écart des poutres longitudinales 5.

Le panneau 1 est pourvu également d'une deuxième gaine 15 pour des câbles. La deuxième gaine 15 traverse également le panneau suivant la direction longitudinale X et parallèlement aux poutres longitudinales 5 en traversant les poutres transversales 7.

Les bords du panneau 1 sont respectivement définis par deux poutres longitudinales 5 aux extrémités du panneau 1 suivant la direction transversale Y et deux poutres transversales 7 aux extrémités du panneau 1 suivant la direction longitudinale X. Un cadre d'interface 17 est prévu aux quatre bords du panneau 1 et est fixé aux poutres 5, 7 d'extrémité en direction longitudinale X et en direction transversale Y.

La figure 2 montre en outre les détails des poutres 5, 7.

Les poutres 5, 7 sont composées d'un empilement d'une pluralité de couches de lattes 19, 21, 23, 25, 27, 29, 31, 33 successives. L'empilement est fait suivant une direction d'empilement Z orthogonale au plan du panneau et aux directions longitudinale et transversale X, Y.

Par exemple, chaque poutre comprend au moins quatre couches de lattes. Dans des autres exemples, des poutres 5, 7 comprennent au moins huit couches de lattes. Dans l'exemple de la figure 2, les poutres 5, 7 sont composées de dix couches de lattes 19, 21, 23, 25, 27, 29, 31, 33.

Les lattes sont des lattes pultrudées en matériau composite, par exemple des lattes pultrudées avec des fibres de renforcement en carbone ou en verre. Par exemple les lattes en matériau composite peuvent comprendre des fibres de renforcement en carbone qui sont agencées dans une résine, par exemple epoxy. Les lattes peuvent également comprendre des lattes en bois de balsa ou matériaux d'âme composite (mousse, nid d'abeille, etc). La majorité de lattes sont, par exemple, de lattes en matériau composite.

Les lattes 19, 21, 23, 25, 27, 29, 31, 33 sont, en section, sensiblement rectangulaire avec deux côtés longs et deux côtés courts. Les côtés longs sont au moins cinq fois plus long que les côtés courts. Dans un autre exemple, les côtés longs sont au moins huit fois plus longs que les côtés courts. Les côtés longs définissent les faces principales des lattes. Les lattes ont une épaisseur égale à la longueur des côtés courts comprises entre 1 mm et 20 mm, en particulier entre 5 mm et 15 mm et une largeur égale à la longueur des côtés longs comprise entre 20 mm et 150 mm, en particulier entre 30 mm et 120 mm. La largeur des lattes 19, 21, 23, 25, 27, 29, 31, 33 correspond à la largeur des poutres 5, 7.

Entre deux couches de lattes adjacentes est disposée une couche adhésive assurant la liaison des lattes entre elles. Les lattes 19, 21, 23, 25, 27, 29, 31, 33 sont collées entre elles suivant leurs faces principales.

Les intersections 9 sont construites par des croisements alternatifs. Dans les couches successives, une première couche présente, à l'intersection 9, suivant la direction longitudinale X, une latte 27 continue traversant de part en part l'intersection 9, et suivant la direction transversale Y, deux lattes interrompues 23, 25 s'étendant de part et d'autre de la latte 27 continue transversalement à celle-ci. Dans une couche adjacente, à cette intersection 9, une latte continue 29 suivant la direction transversale Y traverse de part en part l'intersection 9 et deux lattes interrompues 31, 33 suivant la direction longitudinale X s'étendent de part et d'autre de la latte continue transversalement à celle-ci. Les lattes continues 27, 29 se croisent au niveau de l'intersection 9 en étant en contact l'une avec l'autre avec interposition de la couche adhésive. Sur toutes les couches, ce croisement alternatif est répété.

Par exemple, sur la figure 2 une première couche comprenant les lattes 23, 25, 27 est pourvue d'une latte continue 27 traversant l'intersection 9 suivant la direction longitudinale X et de deux lattes interrompues 23, 25 s'étendant, suivant la direction transversale Y, de part et d'autre de la latte continue 27. Comme visible sur la figure 2, les lattes interrompues 23, 25 buttent, à l'intersection 9, contre la latte continue 27 qui fait partie de la poutre longitudinale 5.

Une deuxième couche sous-jacente de la première couche comprend les lattes 29, 31, 33. La latte continue 29 traverse l'intersection 9 suivant la direction transversale Y et les lattes interrompues 31, 33, s'étendent, suivant la direction longitudinale X de part et d'autre de la latte continue 29. Egalement dans ce cas, les lattes interrompues 31, 33 buttent, à l'intersection 9, contre la latte continue 29 qui fait partie la poutre transversale 7. Une troisième couche sous-jacente de la deuxième couche présente le même agencement que la première couche, etc.

Au cœur du panneau, les lattes interrompues sont enserrées avec interposition d'une couche de colle entre deux lattes continues. De même, les lattes continues sont enserrées entre deux lattes interrompues en dehors de l'intersection 9 et entre deux lattes continues au niveau de l'intersection 9.

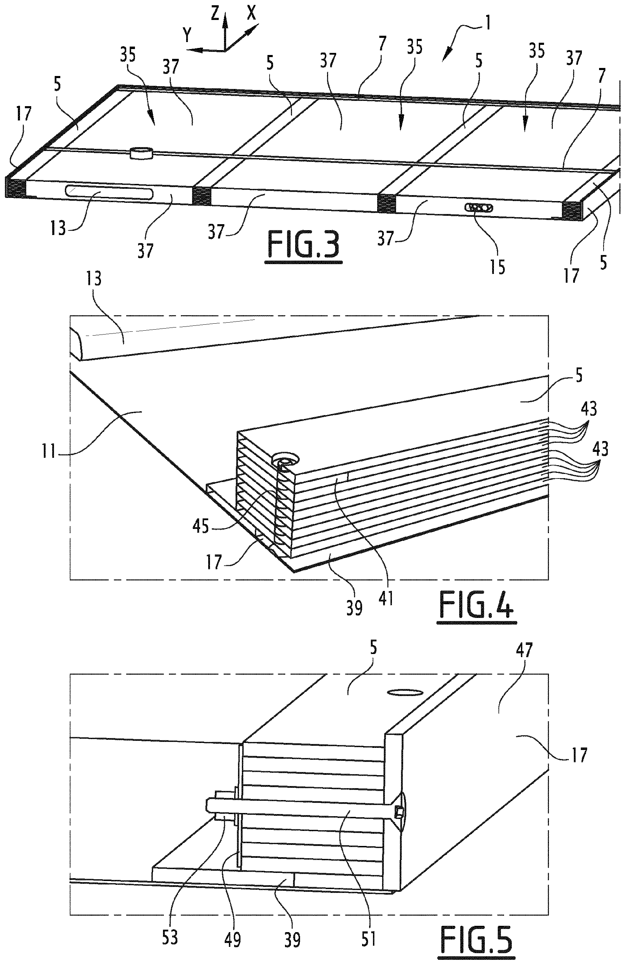

Sur les figures 2 et 3, la gaine aéraulique 13 n'est pas déposée directement sur la plaque de fermeture inférieure 11. La première gaine aéraulique 13 est supportée par au moins deux couches de lattes successives de façon que les deux couches de lattes successives se trouvent entre la plaque de fermeture inférieure 11 et la gaine aéraulique 13. Egalement, au moins deux couches de lattes successives sont agencées entre la gaine aéraulique 13 et la plaque de fermeture supérieure éventuelle.

La figure 3 montre schématiquement le panneau 1 avec le réseau de poutres 3 comprenant les poutres longitudinales 5 et les poutres transversales 7. Le réseau de poutres 3 présente entre les poutres longitudinales 5 et les poutres transversales 7 des cavités 35. Sur la figure 3, ces cavités 35 sont remplies avec une isolation phonique ou acoustique 37. Par exemple, l'isolation phonique 37 est obtenue par une injection de mousse de silicone, ou un matériau d'âme sandwich expansif, par exemple une mousse epoxy ou mise en place de railfibers, de type ouate de fibres polyester. Alternativement, les cavités 35 reçoivent des accumulateurs d'énergie comme des batteries ou des super condensateurs.

La figure 4 montre schématiquement la fixation d'une partie 39 inférieure du cadre d'interface 17 à une poutre longitudinale 5. La partie inférieure 39 du cadre d'interface 17 est sensiblement parallèle à la plaque de fermeture 11 inférieure. Le cadre d'interface 17 est par exemple métallique.

Une platine 41, notamment une platine métallique, comportant un trou taraudé est insérée parmi les couches de lattes 43. La platine 41 a sensiblement la même épaisseur que les lattes 43. Dans un exemple, la platine 41 est agencée, entre deux couches de lattes 43, dans la poutre longitudinale 5 au côté opposé de la partie inférieure 39 du cadre d'interface 17 de la poutre. Les lattes 43 entre la platine 41 et la partie inférieure 39 du cadre d'interface 17 et le cadre d'interface lui-même présentent respectivement un trou pour y insérer une vis 45 s'étendant dans une direction suivant la direction d'empilement Z. Une vis 45 est insérée dans ces trous et vissée dans la platine 41 assurant que toutes les couches de lattes 43 entre la platine 41 et la partie 39 du cadre 17 sont compressées suivant la direction d'empilement Z et la partie inférieure 39 est fixée à la poutre longitudinale 5. La tête de la vis 45 s'appuyant sur la partie inférieure 39 du cadre.

La figure 5 montre une fixation du cadre d'interface 17 dans une direction orthogonale à la direction d'empilement Z. En particulier une partie 47 du cadre d'interface 17 parallèle la direction d'empilement Z couvre les bords du panneau 1. A cet effet, une platine 49, en particulier métallique, comportant un trou ou un trou taraudé est agencée au côté opposé de la poutre longitudinale 5. La poutre 5 comporte un perçage transversale ou une interruption de continuité dans le niveau de latte concerné, pour le passage du corps d'une vis 51 traversant la poutre longitudinale 5. Cette vis est en prise avec le trou taraudé de la platine ou un écrou 53 placé sur la platine 49 pour fixer la partie 47 du cadre d'interface 17, la tête de la vis 51 s'appuyant sur la partie 47 du cadre.

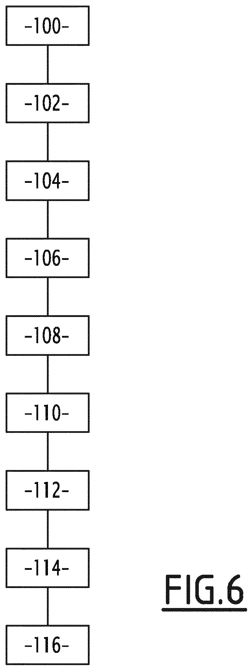

La figure 6 montre différentes étapes pour la fabrication du panneau 1 selon l'invention. La colle utilisée pour les couches adhésives est une colle thermo-activable qui à température ambiante est initialement non activée. Une montée en température met en solution la colle et active sa polymérisation. Dans une première étape 100 optionnelle, la plaque de fermeture 11 inférieure, parallèle au plan du panneau 1, est mise en place.

Dans une étape suivante 102, une couche adhésive, par exemple un film de colle, est appliquée suivant le réseau de poutres 3 à réaliser sur la plaque de fermeture 11 inférieure si elle est présente. Dans un exemple, la couche adhésive est une colle solide en film, qui est déjà prédécoupée à la forme du réseau de poutres 3.

Dans une étape suivante 104, au moins deux couches de lattes 19, 21, 23, 25, 27, 29, 31, 33 sont déposées suivant la direction d'empilement sur la plaque de fermeture inférieure 11, si présente. Entre chaque couche de lattes, une couche adhésive non activée est appliquée. Les intersections 9 sont construites par le principe de croisement de lattes alternatives comme décrit par rapport à la figure 2.

Ensuite, dans une étape 106, une couche adhésive et une ou plusieurs gaines (13, 15) sont déposées sur les couches de lattes. Latéralement entre les gaines, une pluralité de couches de lattes est déposées de la même manière que dans l'étape 104, jusqu'au niveau supérieur de la ou de chaque gaine 13, 15.

Dans une étape 108 suivante, au moins deux couches de lattes sont déposées avec interposition de couches adhésives de la même manière que dans l'étape 104 pour finir l'empilement des couches de lattes. Les intersections 9 sont formées suivant le principe de croisement de lattes alternatives montrées sur la figure 2.

Ensuite, dans une étape 110 optionnelle, l'isolation phonique 37 et/ou le ou les accumulateurs d'énergie sont agencés dans les cavités 35.

L'isolation phonique et/ou le ou les accumulateurs d'énergie sont seulement insérés dans cette étape si ces éléments peuvent supporter la chaleur nécessaire pour la mise en solution de chaque couche adhésive et de sa polymérisation.

Une plaque de fermeture supérieure est déposée sur le réseau de poutres dans une étape optionnelle 112 avec interposition d'une couche adhésive. Par exemple, si les équipements qui sont installés dans les cavités 35 ne supportent pas la chaleur, la plaque de fermeture supérieure est fixée ultérieurement comme dernière étape du procédé après une étape 116 décrite ci-dessous. En plus, dans cette étape 112, un revêtement est avantageusement appliqué sur la plaque de fermeture supérieure.

Dans une étape suivante 114, une bâche flexible est appliquée sur le panneau et est ensuite mise sous vide. Par exemple, la bâche est en silicone formée ou moulée sur un prototype. Sa forme correspond à la forme tridimensionnelle à l'état du panneau avant l'application de la bâche flexible en silicone. Par exemple, la bâche en silicone a une épaisseur d'environ 5 mm. Le vide permet la compression uniforme de l'empilement des couches de lattes successives pendant la mise en solution et la polymérisation des éléments de collage.

Ensuite, dans l'étape 116, le panneau 1 est chauffé pour assurer une mise en solution de la couche adhésive et sa polymérisation. Le chauffage est réalisé par une cloche étuve ou d'autres moyens tels qu'un plateau chauffant. Dans un autre mode de réalisation, un autre matériau pour la bâche flexible est utilisé qui supporte la chaleur nécessaire pour la mise en solution et la polymérisation des couches adhésives.

Si les cavités 35 ne sont pas encore remplies avec une isolation phonique ou des accumulateurs d'énergie une telle installation est faite après que le panneau a refroidi.

Le procédé de fabrication permet d'alléger les structures et de réduire les moyens de production et les manutentions. De plus, plusieurs fonctions, par exemple une isolation acoustique, un câblage, une gaine aéraulique et/ou des accumulateurs d'énergie sont intégrés dans l'épaisseur du panneau. Le procédé permet de réduire le temps de production. De plus, de tels panneaux sont simples à produire. L'obtention « one shot » d'un sous-ensemble de type pavillon ou plancher fini et équipé et une customisation très rapide est alors possible.

Finalement, les collages sur des grandes surfaces garantissent des marges de sécurité très élevées.

Une alternative, pour l'usage des cavités 35 est la mise en œuvre d'une résine époxy moussante avant la fermeture du panneau par les tôles inférieures et supérieures. Celle-ci assure un rôle d'âme sandwich permettant d'obtenir un panneau extrêmement raid et léger.

## Revendications

1. Panneau (1) pour un véhicule ferroviaire, notamment un plancher ou un pavillon d'un véhicule ferroviaire, le panneau s'étendant dans un plan et comprenant un réseau (3) de poutres (5, 7) pourvu d'au moins une intersection (9), les poutres (5, 7) étant composées d'une pluralité de couches successives de lattes (19, 21, 23, 25, 27, 29, 31, 33) empilées suivant une direction d'empilement (Z) orthogonale au plan du panneau, les lattes (19, 21, 23, 25, 27, 29, 31, 33) des couches successives étant fixées entre elles avec une couche adhésive, les couches de lattes comportant des lattes continues (27, 29) se prolongeant de part et d'autre de l'intersection (9) et qui sont disposées au niveau de l'intersection (9), en contact avec au moins une latte continue (29, 27) d'une couche adjacente, chaque couche comportant, de part et d'autre de la latte continue (27, 29), une latte interrompue (19, 21, 23, 25) disposée transversalement à la latte continue et disposée en contact avec au moins une latte continue (29, 27) d'une couche adjacente, **caractérisé en ce qu'**au moins une poutre (5, 7) comporte, dans l'une de ses couches, au moins une platine (41) pourvue d'un trou taraudé pour une fixation d'un élément extérieur (17) et une vis (45) en prise dans le trou taraudé retenant l'élément extérieur (17) contre le panneau.

2. Panneau selon la revendication 1, **caractérisé en ce qu'**il comporte au moins une gaine (13, 15) traversant, au moins partiellement, le réseau (3) de poutres, de façon à ce qu'au moins une couche de lattes soit agencée, sur un ou sur chaque côté de la ou de chaque gaine (13, 15) suivant la direction d'empilement (Z).

3. Panneau selon la revendication 1 ou 2, **caractérisé en ce que** chaque poutre comporte au moins quatre couches de lattes (19, 21, 23, 25, 27, 29, 31, 33).

4. Panneau selon l'une des revendications précédentes, **caractérisé en ce qu'**il comporte au moins une plaque de fermeture (11) fixée, en particulier collée, suivant la direction d'empilement (Z) sur une ou sur chaque côté du réseau de poutre (3) et s'étendant sur tout la surface du panneau.

5. Panneau selon l'une des revendications précédentes, **caractérisé en ce qu'**il comporte une pluralité de cavités (35) entre les poutres (5, 7), un matériau d'isolation phonique (37) et/ou un accumulateur d'énergie étant agencé(s) dans la ou les cavités (35).

6. Panneau selon l'une des revendications précédentes, **caractérisé en ce que** les lattes comprennent des fibres de renforcement en carbone et/ou en verre dans une résine.

7. Panneau selon l'une des revendications précédentes, caractérisé en ce dans chaque couche, à chaque intersection (9), la latte continue (27, 29) est agencée sensiblement orthogonalement aux lattes interrompues (19, 21, 23, 25, 31, 33).

8. Panneau selon l'une des revendications précédentes, **caractérisé en ce que**, aux intersections, les lattes interrompues (19, 21, 23, 25, 31, 33) butent contre les lattes continues (27, 29).

9. Procédé pour fabriquer un panneau (1) d'un véhicule ferroviaire, selon l'une des revendications 1-8, notamment un plancher ou un pavillon d'un véhicule ferroviaire, le panneau (1) s'étendant dans un plan et comprenant un réseau (3) de poutres (5, 7) formant au moins une intersection (9), le procédé comprenant les étapes suivantes :
- déposer (104) une première couche de lattes suivant le réseau de poutres, la première couche de lattes comprenant une pluralité de lattes, la ou chaque intersection étant pourvue d'une latte continue se prolongeant de part et d'autre de l'intersection (9) et de part et d'autre de la latte continue une latte interrompue disposée transversalement à la latte continue ;
- déposer (104) une pluralité de couches successives de lattes suivant une direction d'empilement (Z) orthogonale au plan du panneau suivant le réseau de poutres sur la couche de lattes précédente en appliquant une couche adhésive entre chaque couche de lattes, de sorte que des lattes continues (27, 29) se prolongent de part et d'autre de l'intersection (9) et sont disposées au niveau de l'intersection (9), en contact avec au moins une latte continue (27, 29) d'une couche précédente, et, de part et d'autre de la latte continue (27, 29), une latte interrompue (19, 21, 23, 25) disposée transversalement à la latte continue et disposée en contact avec au moins une latte continue (27, 29) d'une couche précédente disposée transversalement,
- insérer, dans l'une des couches d'au moins une poutre (5, 7), au moins une platine (41) pourvue d'un trou taraudé pour une fixation d'un élément extérieur (17),
- insérer une vis (45) dans le trou taraudé pour retenir l'élément extérieur (17) contre le panneau.

10. Procédé selon la revendication 9, comprenant en outre les étapes suivantes :
- appliquer (114) au moins une bâche flexible préformée, notamment en silicone, sur l'ensemble du panneau,
- mettre la bâche flexible sous vide, et
- chauffer (116) le panneau à une température suffisante pour mettre en solution les couches adhésives et pour les polymériser.

11. Procédé selon l'une des revendications 9 et 10, pour fabriquer un panneau selon l'une des revendications 1 à 8.

## Patentansprüche

1. Platte (1) für eine Schienenfahrzeug, insbesondere für einen Boden oder ein Dach eines Schienenfahrzeugs, wobei sich die Platte in einer Ebene erstreckt und ein Netz (3) von Balken (5, 7) umfasst, die mit mindestens einem Knotenpunkt (9) versehen sind, wobei die Balken (5, 7) aus einer Mehrzahl von aufeinanderfolgenden Schichten von Leisten (19, 21, 23, 25, 27, 29, 31, 33), die gemäß einer Stapelrichtung (Z) senkrecht zur Ebene der Platte gestapelt sind, zusammengesetzt sind, wobei die Leisten (19, 21, 23, 25, 27, 29, 31, 33) der aufeinanderfolgenden Schichten untereinander mit einer Klebstoffschicht befestigt sind, die Leistenschichten durchgehende Leisten (27, 29) aufweisen, die sich beidseitig des Knotenpunktes (9) verlängern und die an dem Knotenpunkt (9) in Kontakt mit mindestens einer durchgehenden Leiste (29, 27) einer benachbarten Schicht angeordnet sind und jede Schicht beidseitig der durchgehenden Leiste (27, 29) eine unterbrochene Leiste (19, 21, 23, 25) aufweist, die quer zur durchgehenden Leiste angeordnet ist und in Kontakt mit mindestens einer durchgehenden Leiste (29, 27) einer benachbarten Schicht angeordnet ist, **dadurch gekennzeichnet, dass** mindestens ein Balken (5, 7) in einem seiner Schichten mindestens eine Halteplatte (41) aufweist, die mit einem Gewindeloch für die Befestigung eines äußeren Elementes (17) und einer Schraube (45) im Eingriff mit dem Gewindeloch, die das äußere Element (17) an der Halteplatte hält, versehen ist.

2. Platte nach Anspruch 1, **dadurch gekennzeichnet, dass** sie mindestens eine Abdeckung (13, 15) aufweist, die zumindest teilweise das Balkennetz (3) derart kreuzt, dass mindestens eine Leistenschicht an einer oder jeder Seite der oder jeder Abdeckung (13, 15) gemäß der Stapelrichtung (Z) angeordnet ist.

3. Platte nach Anspruch 1 oder 2, **dadurch gekennzeichnet, dass** jeder Balken mindestens vier Leistenschichten (19, 21, 23, 25, 27, 29, 31, 33) aufweist.

4. Platte nach einem der vorhergehenden Ansprüche, **dadurch gekennzeichnet, dass** sie mindestens eine Abschlussplatte (11) aufweist, die gemäß der Stapelrichtung (Z) an einer oder jeder Seite des Balkennetzes (3) befestigt, insbesondere geklebt ist und sich über die gesamte Fläche der Platte erstreckt.

5. Platte nach einem der vorhergehenden Ansprüche, **dadurch gekennzeichnet, dass** sie eine Mehrzahl von Hohlräumen (35) zwischen den Balken (5, 7) aufweist, wobei ein Schallisoliermaterial (37) und/oder ein Energiespeicher in dem oder den Hohlräumen (35) angeordnet ist/sind.

6. Platte nach einem der vorhergehenden Ansprüche, **dadurch gekennzeichnet, dass** die Leisten in einem Harz Verstärkungsfasern aus Kohlenstoff und/oder Glas umfassen.

7. Platte nach einem der vorhergehenden Ansprüche, **dadurch gekennzeichnet, dass** in jeder Schicht, an jedem Knotenpunkt (9) die durchgehende Leiste (27, 29) im Wesentlichen senkrecht zu den unterbrochenen Leisten (19, 21, 23, 25, 31, 33) angeordnet sind.

8. Platte nach einem der vorhergehenden Ansprüche, **dadurch gekennzeichnet, dass** an den Knotenpunkten die unterbrochenen Leisten (19, 21, 23, 25, 31, 33) an den durchgehenden Leisten (27, 29) anstoßen.

9. Verfahren zum Herstellen einer Platte (1) eines Schienenfahrzeugs nach einem der Ansprüche 1 bis 8, insbesondere eines Bodens oder eines Dachs eines Schienenfahrzeugs, wobei sich die Platte (1) in einer Ebene erstreckt und ein Netz (3) von Balken (5, 7) umfasst, die mindestens einen Knotenpunkt (9) bilden, wobei das Verfahren die folgenden Schritte umfasst:
- Anordnen (104) einer ersten Leistenschicht entsprechend dem Balkennetz, wobei die erste Leistenschicht eine Mehrzahl von Leisten umfasst, wobei der oder jeder Knotenpunkt mit einer durchgehenden Leiste, die sich beidseitig des Knotenpunktes (9) verlängert und einer unterbrochenen Leiste beidseitig der durchgehenden Leiste versehen ist, die quer zur durchgehenden Leiste angeordnet ist;
- Anordnen (104) einer Mehrzahl von aufeinanderfolgenden Leistenschichten gemäß einer Stapelrichtung (Z) senkrecht zur Ebene der Platte entsprechend dem Balkennetz auf die vorhergehende Leistenschicht, wobei eine Klebstoffschicht zwischen jeder Leistenschicht aufgebracht wird, derart, dass die durchgehenden Leisten (27, 29) sich beidseitig des Knotenpunktes (9) verlängern und an dem Knotenpunkt (9) in Kontakt mit mindestens einer durchgehenden Leiste (29, 27) einer vorhergehenden Schicht angeordnet sind, und beidseitig der durchgehenden Leiste (27, 29) eine unterbrochene Leiste (19, 21, 23, 25) vorgesehen ist, die quer zur durchgehenden Leiste angeordnet ist und in Kontakt mit mindestens einer durchgehenden Leiste (27, 29) einer vorhergehenden, quer angeordneten Schicht angeordnet ist,
- Einsetzen in eine der Schichten mindestens eines Balkens (5, 7) mindestens einer Halteplatte (41), die mit einem Gewindeloch für die Befestigung eines äußeren Elementes (17) versehen ist,
- Einsetzen einer Schraube (45) in das Gewindeloch, um das äußere Element (17) an der Platte festzuhalten.

10. Verfahren nach Anspruch 9, außerdem die folgenden Schritte umfassend:
- Aufbringen (114) mindestens einer vorgeformten flexiblen Abdeckung, insbesondere aus Silikon, auf die Anordnung der Platte,
- Setzen der flexiblen Abdeckung unter Unterdruck und
- Aufheizen (116) der Platte auf eine ausreichende Temperatur, um die Klebstoffschichten in Lösung zu bringen und sie zu polymerisieren.

11. Verfahren nach einem der Ansprüche 9 bis 10, zum Herstellen einer Platte nach einem der Ansprüche 1 bis 8.

## Claims

1. A panel (1) for a railroad vehicle, in particular a floor or roof of a railroad vehicle, the panel extending in a plane and comprising a grid (3) of beams (5, 7) provided with at least one intersection (9), the beams (5, 7) being made up of a plurality of successive layers of battens (19, 21, 23, 25, 27, 29, 31, 33) stacked in a stacking direction (Z) orthogonal to the plane of the panel, the battens (19, 21, 23, 25, 27, 29, 31, 33) of the successive layers being fastened to one another with a layer of adhesive, the layers of battens including continuous battens (27, 29) extending on either side of the intersection (9) and that are arranged at the intersection (9), in contact with at least one continuous batten (29, 27) of an adjacent layer, each layer including, on either side of the continuous batten (27, 29), an interrupted batten (19, 21, 23, 25) positioned transversely to the continuous batten and positioned in contact with at least one continuous batten (29, 27) of an adjacent layer **characterized in that** at least one beam (5, 7) includes, in one of its layers, at least one platen (41) provided with a tapped hole for fastening an outer element (17) and a screw (45) engaged in the tapped hole retaining the outside element (17) against the panel.

2. The panel according to claim 1, **characterized in that** it includes at least one duct (13, 15) passing at least partially through the grid (3) of beams, such that at least one layer of battens is arranged on one or each side of the or each duct (13, 15) in the stacking direction (Z).

3. The panel according to claim 1 or 2, **characterized in that** each beam includes at least four layers of battens (19, 21, 23, 25, 27, 29, 31, 33).

4. The panel according to one of the preceding claims, **characterized in that** it includes at least one closing plate (11) fastened, in particular glued, in the stacking direction (Z) on one or each side of the grid of beams (3) and extending over the entire surface of the panel.

5. The panel according to one of the preceding claims, **characterized in that** it includes a plurality of cavities (35) between the beams (5, 7), a sound insulating material (37) and/or an energy accumulator being arranged in a cavity or cavities (35).

6. The panel according to one of the preceding claims, **characterized in that** the battens comprise carbon and/or glass reinforcing fibers in a resin.

7. The panel according to one of the preceding claims, **characterized in that** in each layer, at each intersection (9), the continuous batten (27, 29) is arranged substantially orthogonally to the interrupted battens (19, 21, 23, 25, 31, 33).

8. The panel according to one of the preceding claims, **characterized in that**, at the intersections, the interrupted battens (19, 21, 23, 25, 31, 33) abut against the continuous battens (27, 29).

9. A method for manufacturing a panel (1) of a railroad vehicle according to any one of the claims 1 to 8, in particular a floor or roof for a railroad vehicle, the panel (1) extending in a plane and comprising a grid (3) of beams (5, 7) forming at least one intersection (9), the method comprising the following steps:
- depositing (104) a first layer of battens along the grid of beams, the first layer of battens comprising a plurality of battens, the or each intersection being provided with a continuous batten extending on either side of the intersection (9) and, on either side of the continuous batten, an interrupted batten positioned transversely to the continuous batten;
- depositing (104) a plurality of successive layers of battens in a stacking direction (Z) orthogonal to the plane of the panel along the grid of beams on the preceding layer of battens by applying a layer of adhesive between each layer of battens, such that the continuous battens (27, 29) extend on either side of the intersection (9) and are positioned at the intersection (9), in contact with the least one continuous batten (27, 29) of the preceding layer, and, on either side of the continuous batten (27, 29), an interrupted batten (19, 21, 23, 25) positioned transversely to the continuous batten and positioned in contact with at least one continuous batten (27, 29) of a preceding layer positioned transversely,
- inserting, into one of the layers of at least one beam (5, 7) at least one platen (41) provided with a tapped hole for fastening an outer element (17),
- inserting a screw (45) in the tapped hole for retaining the outside element (17) against the panel.

10. The method according to claim 9, further comprising the following steps:
- applying (114) at least one preformed flexible tarp, in particular made from silicone, over the entire panel,
- placing the flexible tarp under a vacuum, and
- heating (116) the panel to a sufficient temperature to place the adhesive layers in solution and polymerize them.

11. The method according to one of claims 9 and 10, to manufacture a panel according to one of claims 1 to 8.
